# EUROPÄISCHE PATENTANMELDUNG

(11) **EP 0 805 558 A2**
(43) Veröffentlichungstag der Anmeldung: **05.11.1997**
(21) Anmeldenummer: 97107232.7
(22) Anmeldetag: 30.04.1997
(51) Int. Cl.: H03K 19/00, H04L 7/00

(54) **Anordnung zur prioritätsabhängigen Aktivierung eines Ausgangs von zumindest zwei Schaltungseinheiten**

(30) Priorität: 30.04.1996 DE 19617390
(71) Anmelder: SIEMENS AKTIENGESELLSCHAFT, 80333 München (DE)
(72) Erfinder: Rogasch, Volker, 17491 Greifswald (DE)

(57) **Zusammenfassung**

Mehrere, unterschiedliche Prioritäten (pr1...3) aufweisende Schaltungseinheiten (SE1...3) sind über einen Steuerbus (SB) miteinander verbunden. Jede Schaltungseinheit (SE1...3) umfaßt eine mit dem Steuerbus (SB) verbundene Logikeinheit (LE1...3), mit deren Hilfe der Steuerausgang (LA) derjenigen fehlerfreien bzw. gültigen Schaltungseinheit (SE1...3) mit der höchsten Priorität (pr1...3) aktiv geschaltet wird, wobei ein Teil ihrer Steuereingänge (ST1...3, ZST1...s) prioritätsabhängig mit bestimmten Steuerleitungen (SL1_1...3) und ein weiterer Steuereingang (ST4) mit einer Fehlerinformationen übermittelnden Signalisierungsleitung (ASL) verbunden sind. Die erfindungsgemäße Schaltungsstruktur wird zur prioritätsabhängigen Auswahl eines von mehreren Taktsignalen (cl1...3) eingesetzt.

## Beschreibung

In Kommunikationseinrichtungen, die beispielsweise im Zubringerbereich von Kommunikationssystemen oder auf Basis der 2 MBit/s-Hierarchie in plesiochronen Übertragungsnetzen eingesetzt werden, ist häufig aus einer größeren Anzahl verfügbarer Signale eines dieser Signale auszuwählen und beispielsweise als Referenzsignal zur Synchronisation einer Kommunikationseinrichtung weiterzuleiten. Dabei soll im Fall einer Störung des ausgewählten Signals gemäß einer vorher definierten Reihenfolge auf ein Signal niedrigerer Priorität umgeschaltet und nach Beseitigung der Störung auf das vorhergehende Signal bzw. auf dasjenige störungsfreie Signal mit der höchsten Priorität zurückgeschaltet werden. Standardmäßig sind die genannten potentiellen Signale über Bustreiber an eine gemeinsame Signalbusleitung geführt. So weisen beispielsweise ein Cross-Connector oder eine Radio-Distribution-Unit eines DECT- oder CDMA-Übertragungssystems mehrere 2 MBit/s-Ports auf, aus deren anliegenden PCM-Signalen jeweils ein Taktsignal für die Referenztaktbildung rückgewonnen und als Referenztaktsignal an eine Kommunikationseinrichtung weitergeleitet wird. Üblicherweise wird in vielen Kommunikationseinrichtungen zur Steuerung der Signalbus-Treiber eine zentrale, aus Sicherheits- bzw. Redundanzgründen häufig redundant realisierte Steuerbaugruppe eingesetzt. Wesentlicher Bestandteil solcher zentraler Steuerbaugruppen ist eine fest vorgegebene oder im allgemeinen frei konfigurierbare Prioritätsliste, in der den zur Synchronisation vorgesehenen verfügbaren Signalen bzw. Taktsignalen Prioritäten zugeordnet sind. Im Falle einer Störung oder Eintreffen eines bestimmten Alarmsignals wird das jeweils mit der höchsten Priorität verfügbare Signal bzw. Taktsignal mit Hilfe der Prioritätsliste ermittelt und zur Synchronisation herangezogen. Die Qualität der einzelnen Taktsignale werden in speziellen Takteinheiten ermittelt und der zentralen Steuerung durch Fehlerinformationen bzw. Gültigkeitssignale gemeldet. Nach Auswertung der übermittelten Fehlerinformationen bzw. Gültigkeitssignale in der zentralen Steuerung erfolgt durch diese die Steuerung der einzelnen Treiberstufen der Taktbusleitung. Die hierzu erforderlichen zentralen Steuerfunktionen, wie
- Erkennen der gestörten Taktquellen,
- Abschalten der aktiven Taktquelle im Falle einer Störung und Umschaltung auf eine weitere Taktquelle entsprechend Prioritätsliste und
- Zurückschalten auf die Taktquelle höchster Priorität nach Beseitigung einer Störung
sind entweder durch eine spezielle Hardwaresteuerung oder durch ein in einem zentral angeordneten Mikroprozessor ablaufendes Steuerprogramm realisiert. Insbesondere bei zu steuernden, komplexen Gerätekonfigurationen mit hohen Umschaltgeschwindigkeiten zwischen den Signalen bzw. Taktsignalen, werden hohe Anforderungen an das Echtzeitverhalten der Steueranordnung gestellt, zumal sich der Schaltungsaufwand zusätzlich erhöht, wenn aus sicherheitstechnischen bzw. Redundanz-Gründen die zentrale Steuerungsanordnung mehrfach ausgelegt ist. Eine solche Schaltungsanordnung mit aus sicherheitstechnischen Gründen doppelten Zentraleinschüben CUCC eines 64 kbit/s Cross-Connect CC64K, d.h. einer redundant ausgelegten Steueranordnung sowie mit einer vorgebbaren Taktprioritätenliste zur Auswahl einer Taktquelle zur Synchronisation des Cross-Connect ist zum Beispiel in der Technischen Beschreibung TED S42024-A1765-B1-2-18 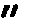 Zentraleinschub Cross-Connect CUCC" der Firma SIEMENS AG, insbesondere Bild 1 und Kapitel 2.4.1, beschrieben.

Der Erfindung liegt die Aufgabe zugrunde, den Schaltungsaufwand für eine Anordnung zur redundanten prioritätsabhängigen Steuerung von Signalen bzw. Taktsignalen unter Berücksichtigung hoher Schaltgeschwindigkeiten bei unterbrechungsfreiem Betrieb zu reduzieren. Die Aufgabe wird durch die kennzeichnenden Merkmale des Patentanspruchs 1 gelöst.

Der wesentliche Aspekt der erfindungsgemäßen Anordnung besteht in einer dezentralen prioritätsabhängigen Steuerung von Signalen bzw. Taktsignalen mit Hilfe von Schaltungseinheiten, wobei für jedes Signal eine Schaltungseinheit vorgesehen ist.

Diese dezentrale Steuerung von Signalen bzw. Taktsignalen ist durch minimale Schaltlogik realisierbar, wobei die äquivalent aufgebauten Schaltungseinheiten über einen Steuerbus miteinander verbunden sind. Hierbei ist jede Schaltungseinheit mit einer Steuerleitung erster Ordnung des Steuerbusses verbunden und kann die ihr jeweils zugeordnete Steuerleitung erster Ordnung in einen definierten Aktiv- oder Passiv-Zustand schalten. Jeweils alle anderen Schaltungseinheiten bzw. deren Steuereingänge können als Empfänger an diese Steuerleitung erster Ordnung angeschlossen werden. Eine in jeder Schaltungseinheit angeordnete Logikeinheit ist abhängig von der Priorität der jeweiligen Schaltungseinheit mit bestimmten Steuerleitungen erster Ordnung des Steuerbusses verbunden. Um undefinierte Schaltzustände in den Schaltungseinheiten zu vermeiden, ist intern jeder Steuereingang der Logikeinheit in den Passiv-Zustand geschaltet. Aufgrund der erfindungsgemäßen Ausgestaltung und Verbindung der einzelnen Schaltungseinheiten untereinander wird unter Berücksichtigung bestimmter über eine Signalisierungsleitung übermittelter Fehlerinformationen bzw. Gültigkeitssignale der Ausgang derjenigen fehlerfreien bzw. gültigen Schaltungseinheit mit der höchsten Priorität aktiv geschaltet.

Durch die dezentrale prioritätsabhängige Steuerung der Signale mit Hilfe von mit minimalen Aufwand realisierbaren Schaltungseinheiten kann auf die zentrale Steuerbaugruppe einschließlich von redundanten, zentralen Steuerbaugruppen verzichtet und damit eine erhebliche Reduzierung des Schaltungsaufwandes erreicht werden.

Bei der erfindungsgemäßen Anordnung besitzen alle Steuerleitungen erster Ordnung des Steuerbusses die gleiche Wertigkeit und eine Steuerleitung erster Ordnung zeigt den Zustand - Aktiv/Passiv - einer einzigen Schaltungseinheit an, so daß die Anzahl der benötigten Steuerleitungen des Steuerbusses genau der Anzahl der zu verwaltenden Schaltungseinheiten entspricht. Der wirtschaftliche Aufwand bzw. Schaltungsaufwand der erfindungsgemäßen Anordnung bzw. die Anzahl der gleichzeitig parallel geführten Steuerleitungen erster Ordnung des Steuerbusses kann minimiert werden, indem mehrere Schaltungseinheiten und der dazugehörige Steuerbus bzw. Steuerleitungen erster Ordnung zu Gruppenschaltungseinheiten erster Ordnung zusammengefaßt werden, wobei die so gebildeten jeweils eine unterschiedliche Gruppenpriorität aufweisenden Gruppenschaltungseinheiten erster Ordnung wiederum über zusätzliche Steuerleitungen zweiter Ordnung gemäß der erfindungsgemäßen Anordnung verbunden sind - Anspruch 2. Um insbesondere bei großen zu steuernden Systemen die Anzahl von parallel geführten Steuerleitungen weiter zu reduzieren, können erfindungsgemäß mehrere Gruppenschaltungseinheiten erster bzw. beliebiger Ordnung zusammen mit den dazugehörigen Steuerleitungen zweiter, bzw. beliebiger Ordnung zu Gruppenschaltungseinheiten zweiter, bzw. höherer Ordnung zusammengefaßt werden. Durch die Aufteilung der ursprünglichen Anordnung in Gruppenschaltungseinheiten unterschiedlicher Ordnung kann der wirtschaftliche und schaltungstechnische Aufwand weiter reduziert werden, da beispielsweise der Verdrahtungsaufwand auf der Verdrahtungsplatte bzw. Backplan minimiert sowie die Anzahl der benötigten Steuereingänge an der Logikeinheit jeder Schaltungseinheit gering gehalten wird - Anspruch 3.

Vorteilhaft wird der am Ausgang der Schaltungseinheit vorliegende Aktiv- oder Passiv-Zustand zusätzlich an den Steuereingang eines Busleitungstreibers geführt, um eine prioritätsgesteuerte Referenzsignalauswahl aus mehreren zur Verfügung stehenden Signalen - z.B. Taktsignalen - zu erreichen - Anspruch 4. In die Schaltungseinheit ist vorteilhaft die eingangs erläuterte Takteinheit integriert, wodurch eine Reduzierung des konstruktiven und Stromversorgungsaufwandes erreicht wird - Anspruch 5. Durch einen in jeder Schaltungseinheit angeordneten statischen Schalter - z.B. DIP-Schalter - wird eine besonders einfache und flexible Prioritätszuteilung für die angeordneten Schaltungseinheiten ermöglicht. Vorteilhaft kann im Falle häufig wechselnder Prioritäten eine flexible Prioritätszuteilung durch ein von einem Steuerrechner konfigurierbares elektronisches Schaltelement realisiert werden - Anspruch 6.

Ein weiterer Vorteil der Erfindung liegt darin, daß Schaltungseinheiten, die physikalisch nicht oder nicht mehr vorhanden sind - z.B. nicht belegte Steckplätze - , die Funktionalität der erfindungsgemäßen dezentralen Steuerung nicht beeinträchtigen, da ein Schalten der diesen nicht vorhandenen Schaltungseinheiten zugeordneten Steuerbusleitungen in den Aktiv-Zustand nicht möglich ist und somit keine besonderen Redundanzbildungs-Maßnahmen zur Durchführung der dezentralen Steuerung notwendig sind.

Weiterhin ist die in jeder Schaltungseinheit enthaltene Logikeinheit durch lediglich ein logisches Gatter mit der Grundfunktion NAND - bei Einsatz eines 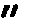 aktiv-low"-Steuerbus - oder vom Typ NOR - bei Einsatz eines 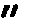 aktiv-high"-Steuerbus - ausgeführt, wodurch eine besonders wirtschaftliche Lösung möglich ist - Anspruch 7. Zudem wird ein vorteilhaftes Echtzeitverhalten der erfindungsgemäßen Anordnung erreicht, da die Schaltgeschwindigkeit bei einer Auswahl von weiteren Signalen nach Erkennung einer Störung bzw. nach Beenden einer Störung lediglich durch die Schaltzeiten der schnellen Schaltungstechnik-Bauelemente wie Schalter, Logikelemente und Bustreiber bestimmt ist.

Im folgenden wird die erfindungsgemäße dezentrale Steuerung von Schaltungseinheiten anhand zweier Anordnungsbeispiele näher erläutert. Dabei zeigen:
- Fig. 1: eine Anordnung einer dezentralen Steuerung zur Auswahl eines Referenztaktsignals aus mehreren in einer Gruppe angeordneten Taktsignalen
- Fig. 2: eine vorteilhafte Ausgestaltung der erfindungsgemäßen Anordnung zur Steuerung einer großen Anzahl von Schaltungseinheiten

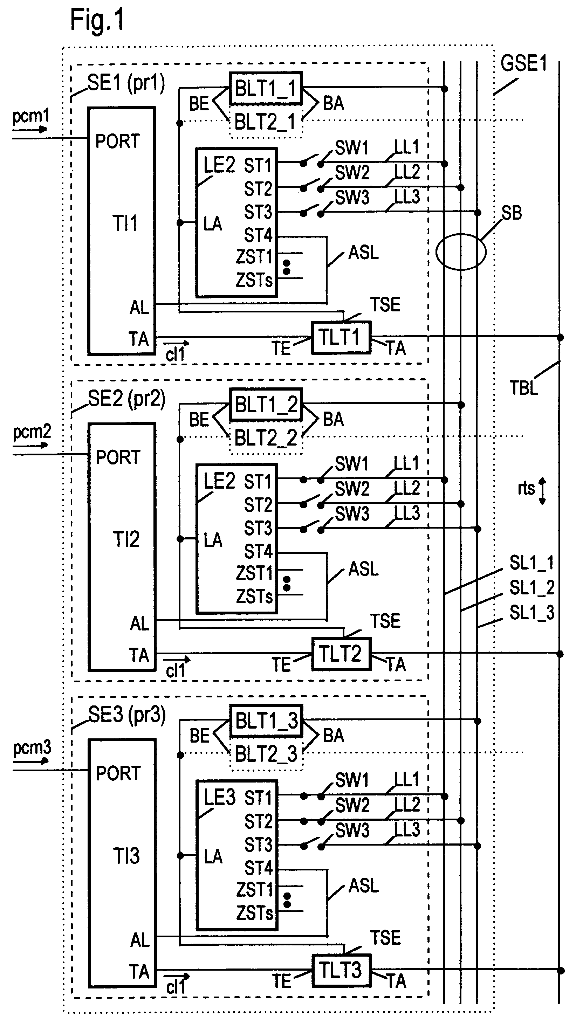

Fig. 1 zeigt diejenigen in einer Gruppenschaltungseinheit erster Ordnung GSE1 angeordneten Systemkomponenten, die für die erfindungsgemäße dezentrale Steuerung dreier Taktsignale cl1...3 erforderlich sind. Die Anordnung setzt sich aus drei über einen Steuerbus SB miteinander verbundenen Schaltungseinheiten SE1...3 zusammen, wobei der ersten Schaltungseinheit SE1 die höchste Priorität pr1, der zweiten Schaltungseinheit SE2 die zweithöchste Priorität pr2 und der dritten Schaltungseinheit SE3 die niedrigste Priorität pr3 zugeordnet ist.

Die dargestellten Schaltungseinheiten SE1...3 sind äquivalent wiefolgt aufgebaut:
Für die Abwicklung der logischen Schaltvorgänge der dezentralen Steuerung ist in jeder Schaltungseinheit SE1...3 eine mehrere Steuereingänge ST1...4,ZST1...s aufweisende, durch ein Standardgatter vom Typ NAND realisierte Logikeinheit LE1...3 angeordnet. Ein Steuerausgang LA der Logikeinheit LE1...3 ist an einen Eingang BE eines Busleitungstreibers BLT1_1...3 erster Ordnung geschaltet, dessen Ausgang BA wiederum mit einer der jeweiligen Schaltungseinheit SE1...3 zugeordneten Steuerleitung SL1_1...3 erster Ordnung des Steuerbusses SB verbunden ist. Bezogen auf das Ausführungsbeispiel ist der Ausgang BA des in der ersten Schaltungseinheit SE1 angeordneten Busleitungstreibers BLT1_1 erster Ordnung mit der Steuerleitung SL1_1 erster Ordnung des Steuerbusses SB verbunden; ebenso sind der Ausgang BA des in der Schaltungseinheit SE2 angeordneten Busleitungstreibers BLT1_2 erster Ordnung mit der Steuerleitung SL1_2 erster Ordnung sowie der Ausgang BA des in der Schaltungseinheit SE3 angeordneten Busleitungstreibers BLT1_3 erster Ordnung mit der Steuerleitung SL1_3 erster Ordnung des Steuerbusses SB verbunden. In Abhängigkeit des an den Ausgängen BA der Busleitungstreiber BLT1_1...3 erster Ordnung anliegenden aktiven oder passiven Zustands, werden die einzelnen Steuerleitungen SL1_1...3 erster Ordnung in einen Aktiv-Zustand mit niedrigen Spannungspotential oder in einen Passiv-Zustand mit hohen Spannungspotential geschaltet.

Die ersten drei Steuereingänge ST1...3 der Logikeinheit LE1...3 jeder Schaltungseinheit SE1...3 sind jeweils über eine, einen Schalter SW1...3 aufweisende Verbindungsleitung LL1...3 mit einer Steuerleitung SL1_1...3 erster Ordnung des Steuerbusses SB verbunden. Abhängig von der zugeordneten Priorität pr1...3 sind in jeder Schaltungseinheit SE1...3 nur diejenigen Schalter SW1...3 geschlossen und somit nur Verbindungen zu denjenigen Steuerleitungen SL1_1...3 erster Ordnung geschaltet, die - über Busleitungstreiber BLT1_1...3 erster Ordnung - von Schaltungseinheiten SE1...3 höherer Priorität pr1...3 angesteuert werden. Bezogen auf das Ausführungsbeispiel sind in der mit der höchsten Priorität pr1 bewerteten Schaltungseinheit SE1 alle Schalter SW1...3 geöffnet, da in der gezeigten Anordnung keine Schaltungseinheit SE1...3 mit höherer Priorität pr1...3 vorhanden ist. In der zweiten Schaltungseinheit SE2 ist der Steuereingang ST1 der Logikeinheit LE2 über den geschlossenen Schalter SW1 mit der Steuerleitung SL1_1 erster Ordnung und damit mit der, eine höhere Priorität pr1 aufweisenden Schaltungseinheit SE1 verbunden. Da der dritten Schaltungseinheit SE3 die niedrigste Priorität pr3 der Anordnung zugeordnet ist, sind in dieser die Schalter SW1 und SW2 geschlossen und somit die Steuerleitung SL1_1 erster Ordnung mit dem Steuereingang ST1 und die Steuerleitung SL1_2 erster Ordnung mit dem Steuereingang ST2 der Logikeinheit LE3 verbunden.

Ein vierter Steuereingang ST4 jeder Logikeinheit LE1...3 ist über eine Signalisierungsleitung ASL mit einem Alarmierungsausgang AL einer Takteinheit - im weiteren mit Taktinterface TI1...3 bezeichnet - verbunden. An einem Signaleingang PORT jedes Taktinterfaces TI1...3 wird über eine Signalleitung ein PCM-Signal pcm1...3 - 2 Mbit/s gemäß ITU G. 703 - herangeführt, aus dem im Taktinterface TI1...3 jeweils ein Taktsignal cl1...3 rückgewonnen und anschließend an einen Ausgang TA des Taktinterfaces TI1...3 geleitet wird. Das am Ausgang TA anliegende Taktsignal cl1...3 wird über eine Verbindungsleitung an einen Eingang TE eines Taktleitungstreibers TLT1...3 herangeführt, dessen Ausgang TA mit einer Taktbusleitung TBL verbunden ist. Alle weiteren freien, d.h. unbeschalteten Steuereingänge ZST1...s der Logikeinheiten LE1...3 sind aufgrund der internen Voreinstellung in den Passiv-Zustand, d.h. auf hohes Spannungspotential geschaltet.

In den einzelnen Taktinterfaces TI1...3 werden die rückgewonnenen Taktsignale cl1...3 hinsichtlich ihrer Referenztaktsignal-Qualität analysiert. Bei Nichterfüllung der Qualitätsbedingung wird der Alarmierungsausgang AL des Taktinterfaces TI1...3 auf niedriges Potential bzw. in den Aktiv-Zustand geschaltet. Das Erkennen eines fehlerhaften Taktsignals cl1...3 geschieht durch eine schaltungstechnische ODER-Verknüpfung einzelner Alarmkriterien wie
- Signalausfall
- Schleifenbildung am Taktinterface TI1...3
- interner Fehler des Taktinterface TI1...3.
- AIS-Signal am Taktinterface TI1...3

Für den Fall, daß in einer Schaltungseinheit SE1...3 alle Steuereingänge ST1...4,ZST1...s der Logikeinheit LE1...3 in den Passiv-Zustand bzw. auf niedriges Potential geschaltet sind, also keine Schaltungseinheit SE1...3 bzw. Takt mit höherer Priorität pr1...3 aktiv ist und zudem das rückgewonnene Taktsignal cl1...3 die Referenztaktsignal-Bedingung erfüllt - die Signalisierungsleitung ASL ist bei Erfüllung der Referenztaktsignal-Bedingung in den Passiv-Zustand geschaltet -, ist die logische Bedingung - NAND-Bedingung - in der Logikeinheit LE1...3 erfüllt und der Steuerausgang LA ist in den Aktiv-Zustand geschaltet. Ein über eine Verbindungsleitung mit dem Steuerausgang LA der Logikeinheit LE1...3 verbundener Steuereingang TSE des Taktleitungstreibers TLT1...3 wird aktiviert und damit das am Eingang TE anliegende Taktsignal cl1...3 als Referenztaktsignal rts auf die Taktbusleitung TBL geschaltet. Durch gleichzeitiges Weiterschalten des am Steuerausgang LA anliegenden Aktiv-Zustandes über den Busleitungstreiber BLT1_1...3 erster Ordnung auf die zugeordnete Steuerleitung SL1_1...3 erster Ordnung, ist die Schaltbedingung in allen in Schaltungseinheiten SE1...3 niedrigerer Priorität pr1...3 angeordneten Logikeinheiten LE1...3 nicht erfüllt, wodurch die Ausgänge TA aller weiteren Taktleitungstreiber TLT1...3 der Taktbtisleitung TBL in einen hochohmigen Zustand geschaltet sind.

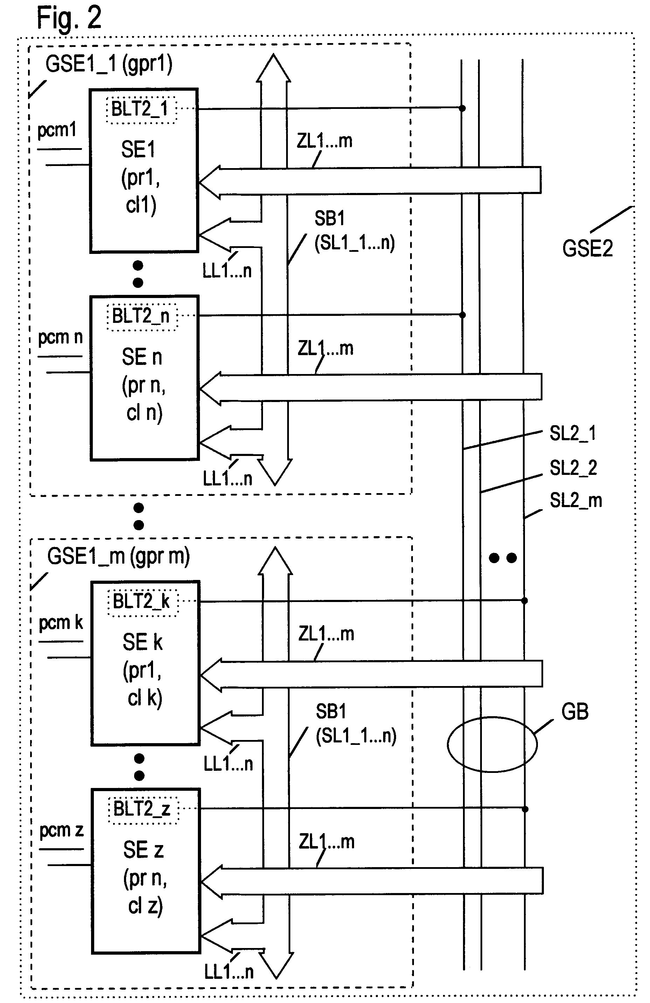

Fig. 2 zeigt eine vorteilhafte Weiterbildung der erfindungsgemäßen Anordnung mit einer größeren Anzahl von Schaltungseinheiten SE1...z und der durch diese gesteuerten Taktsignale pcm1...z. Um eine Reduzierung des in Fig. 1 gezeigten Schaltungsaufwandes zu erreichen, d.h. die Anzahl gleichzeitig parallel geführter Steuerleitungen SL1_1...z (z>>1) erster Ordnung eines Steuerbusses SB zu minimieren, sind zumindest zwei, mit unterschiedlichen Prioritäten pr1...n bewertete Schaltungseinheiten SE1_1...n mit einem dazugehörigen Steuerbus SB1...m zu einer Gruppenschaltungseinheit GSE1_1...m (m>1) erster Ordnung zusammengefaßt - der schaltungstechnische Aufbau einer Gruppenschaltungseinheit GSE1_1...m erster Ordnung entspricht der in Fig. 1 dargestellten Anordnung GSE1. Die in Fig. 2 angeordneten Gruppenschaltungseinheiten GSE1_1...m erster Ordnung, welchen unterschiedliche Gruppen-Prioritäten gpr1...m zugeordnet sind, sind wiederum über zu einem Gruppensteuerbus GB zusammengefaßte Steuerleitungen SL2_1...m zweiter Ordnung gemäß dem in Fig. 1 dargestellten Prinzip der Prioritätssteuerung miteinander verbunden und bilden eine Gruppenschaltungseinheit GSE2 zweiter Ordnung. Jeder Gruppenschaltungseinheit GSE1_1...m erster Ordnung ist eine gruppenspezifische Steuerleitung SL2_1...m zweiter Ordnung zugeordnet, die von den Schaltungseinheiten SE1...n dieser Gruppenschaltungseinheit GSE1_1...m erster Ordnung angesteuert werden kann - Aktiv-/Passiv-Steuerung. Dazu ist der Steuerausgang LA der Logikeinheit LE1...n jeder zu einer Gruppenschaltungseinheit GSE1_1...m erster Ordnung gehörenden Schaltungseinheit SE1...n zusätzlich mit einem Steuereingang BE jeweils eines schaltungstechnisch in die Schaltungseinheit SE1...n integrierten und parallel zum Busleitungstreiber BLT1_1...z erster Ordnung - vgl. Fig.1 - angeordneten Busleitungstreibers BLT2_1...z zweiter Ordnung - durch gepunktete Linien in Fig.1 und Fig.2 angedeutet - verbunden, wobei ein Ausgang BA des Busleitungstreibers BLT2_1...z zweiter Ordnung mit der gruppenspezifischen Steuerleitung SL2_1...m zweiter Ordnung verbunden ist. Durch die Realisierung des Ausgangs BA als Open-Kollektor-Ausgang wird nur bei Anliegen eines Aktiv-Zustands am Eingang BE des Busleitungstreibers BLT2_1...z zweiter Ordnung die entsprechende Steuerleitung SL2_1...m zweiter Ordnung in den Aktiv-Zustand geschaltet; ansonsten verbleibt der Ausgang BA des Busleitungstreibers BLT2_1...z zweiter Ordnung im hochohmigen Zustand. Dies entspricht einer schaltungstechnischen ODER-Verknüpfung der an den einzelnen Steuerausgängen LA anliegenden Schaltzustände von innerhalb einer Gruppenschaltungseinheit GSE1_1...m erster Ordnung angeordneten Logikeinheiten LE1...n, d.h. ist eine Schaltungseinheit SE1...n einer Gruppenschaltungseinheit GSE1_1...m erster Ordnung aktiv, wird die zugeordnete Steuerleitung SL2_1...m zweiter Ordnung in den Aktiv-Zustand geschaltet.

Gemäß der in Fig.1 gezeigten erfindungsgemäßen Anordnung sind in jeder innerhalb einer Gruppenschaltungseinheit GSE1_1...m erster Ordnung angeordneten Schaltungseinheit SE1...n zusätzliche Steuereingänge der Logikeinheit - nicht dargestellt - über zusätzliche Verbindungsleitungen ZL1...m mit denjenigen Steuerleitungen SL2_1...m zweiter Ordnung des Gruppensteuerbusses GB verbunden, die von einer Schaltungseinheit SE1...n einer Gruppenschaltungseinheit GSE1_1...m erster Ordnung mit höherer Gruppen-Priorität gpr1...m angesteuert werden. Sowohl die an die Steuereingänge ST1...3 - nicht dargestellt - jeder Logikeinheit LE1...n geführten Aktiv- oder Passiv-Zustände des lokalen Steuerbusses SB1...m bzw. der Steuerleitungen SL1_1...n erster Ordnung als auch die über zusätzliche Verbindungsleitungen ZL1...m zugeführten Schaltzustände des übergeordneten Gruppensteuerbusses GB bzw. Steuerleitungen SL2_1...m zweiter Ordnung werden von jeder Logikeinheit LE1...z gleichartig bewertet, wodurch die erfindungsgemäße Prioritätssteuerung der Signale cl1...z sowohl innerhalb einer Gruppenschaltungseinheit GSE1_1...m erster Ordnung als auch zwischen den einzelnen Gruppenschaltungseinheiten GSE1_1...m erster Ordnung untereinander erfolgt.

Anhand eines nicht dargestellten, numerischen Realisierungsbeispiels der erfindungsgemäßen Anordnung mit 32 Schaltungseinheiten soll die erfindungsgemäße Reduzierung des schaltungstechnischen Aufwands, d.h. die Reduzierung der Anzahl der parallel geführten Steuerleitungen der erfindungsgemäßen Anordnung zusätzlich verdeutlicht werden. Die angeordneten 32 Schaltungseinheiten werden zu 8 Gruppenschaltungseinheiten erster Ordnung mit jeweils 4 Schaltungseinheiten zusammengefaßt. Der in jeder Gruppenschaltungseinheit erster Ordnung angeordnete Steuerbus setzt sich aus jeweils 4 Steuerleitungen erster Ordnung zusammen, die jeweils von einem in jeder Schaltungseinheit angeordneten Busleitungstreiber erster Ordnung angesteuert werden. Die so gebildeten 8 Gruppenschaltungseinheiten erster Ordnung werden nun zu 2 Gruppenschaltungseinheiten zweiter Ordnung mit jeweils 4 Elementen bzw. 4 Gruppenschaltungseinheiten erster Ordnung zusammengefaßt. In jeder dieser Gruppenschaltungseinheiten zweiter Ordnung werden 4 Steuerleitungen zweiter Ordnung benötigt, die jeweils von einem in jeder Schaltungseinheit angeordneten Busleitungstreiber zweiter Ordnung angesteuert werden. Hierbei werden alle in einer Gruppenschaltungseinheit zweiter Ordnung angeordneten Busleitungstreiber zweiter Ordnung schaltungstechnisch ODER-verknüpft, was durch die Verknüpfung der als OPEN-Kollektor-Ausgänge realisierten Ausgänge der Busleitungstreiber zweiter Ordnung erreicht wird.
Die nunmehr 2 Gruppenschaltungen zweiter Ordnung werden zu einer Gruppenschaltungseinheit dritter Ordnung zusammengefaßt. Hierzu sind lediglich 2 Steuerleitungen dritter Ordnung erforderlich, die jeweils von einem weiteren, in jeder Schaltungseinheit angeordneten Busleitungstreiber dritter Ordnung angesteuert werden. Alle innerhalb einer Gruppenschaltungseinheit zweiter Ordnung angeordneten Busleitungstreiber dritter Ordnung sind wiederum schaltungstechnisch in der vorhergehend beschriebenen Art und Weise ODER-verknüpft. Eine weitere Zusammenfassung von Gruppenschaltungseinheiten ist nicht mehr möglich, da nur eine einzige Gruppenschaltungseinheit dritter Ordnung existiert. Durch die Zusammenfassung von Schaltungseinheiten, d.h. Bildung von Gruppenschaltungseinheiten erster, zweiter und dritter Ordnung, wird die Anzahl der parallel geführten Steuerleitungen von ursprünglich 32 auf 10 reduziert, wodurch sich die erfindungsgemäßen Vorteile bei der Realisierung großer Steueranordnungen bzw. Systeme ergeben.

## Patentansprüche

1. Anordnung zur prioritätsabhängigen Aktivierung eines Ausgangs von zumindest zwei, jeweils einen Ausgang (LA) aufweisenden Schaltungseinheiten (SE1...3), wobei
- jeder Schaltungseinheit (SE1...3) eine Priorität (pr1...3) zugeordnet ist,
- jede Schaltungseinheit (SE1...3) umfaßt
-- einen Busleitungstreiber (BLT1_1...3)erster Ordnung, dessen Ausgang (BA) jeweils eine zugeordnete Steuerleitung (SL1_1...3) erster Ordnung eines Steuerbusses (SB) in den Aktiv- oder Passiv-Zustand steuert, und
-- eine Logikeinheit (LE1...3) mit in einen Passiv-Zustand voreingestellten und in den Aktiv-Zustand steuerbaren Steuereingängen (ST1...4), wobei
--- ein Steuereingang (ST4) mit einer einen Aktiv- oder Passiv-Zustand aufweisenden Signalisierungsleitung (ASL) und
--- weitere Steuereingänge (ST1...3) jeweils mit denjenigen Steuerleitungen erster Ordnung (SL1_1...3) des Steuerbusses (SB) verbunden sind, die von einer Schaltungseinheit (SE1...3) mit höherer Priorität (pr1...3) gesteuert werden
und
- die Logikeinheit (LE1...3) mit Mittel zum Steuern eines Steuerausganges (LA)
-- in den Aktiv-Zustand bei allen in den Passiv-Zustand geschalteten Steuereingängen (ST1...4) oder
-- in den Passiv-Zustand bei zumindest einen in den Aktiv-Zustand geschalteten Steuereingang (ST1...s) ausgestattet ist und
- der Steuerausgang (LA) der Logikeinheit (LE1...3) mit einem Eingang (BE) des Busleitungstreibers (BLT1_1...3) erster Ordnung verbunden ist, wodurch der aktuelle Schaltzustand des Steuerausganges (LA) auf die jeweilige Steuerleitung (SL1_1...3) erster Ordnung des Steuerbusses (SB) geschaltet ist.

2. Anordnung nach Anspruch 1,
**dadurch gekennzeichnet,**
daß bei mehreren Schaltungseinheiten (SE1...n) zumindest zwei Schaltungseinheiten (SE1...n) sowie die von diesen angesteuerten Steuerleitungen (SL1_1...n) erster Ordnung des Steuerbusses (SB) zu einer Gruppenschaltungseinheit (GSE1) erster Ordnung zusammengefaßt werden, wobei bei einer Anordnung mehrerer Gruppenschaltungseinheiten (GSE1_1...m) erster Ordnung
- jeder Gruppenschaltungseinheit (GSE1_1...m) erster Ordnung eine Gruppen-Priorität (gpr1...m) zugeordnet wird, und
in jeder Gruppenschaltungseinheit (GSE1_1...m) erster Ordnung
- der Steuerausgang (LA) jeder Logikeinheit (LE1...n) mit dem Steuereingang (BE) jeweils eines Busleitungstreibers (BLT2_1...z) zweiter Ordnung, dessen Ausgang (BA) an eine gruppenspezifische Steuerleitung (SL2_1...m) zweiter Ordnung eines Gruppensteuerbusses (GB) angeschlossen ist, verbunden ist und
- zusätzliche Steuereingänge (ZST1...s) jeder Logikeinheit (LE1...n) mit denjenigen Steuerleitungen (SL2_1...m) zweiter Ordnung des Gruppensteuerbusses (GB) verbunden sind, die von einer Schaltungseinheit (SE1...n) einer Gruppenschaltungseinheit (GSE1...m) erster Ordnung mit höherer Gruppen-Priorität (gpr1...m) gesteuert werden.

3. Anordnung nach Anspruch 2,
**dadurch gekennzeichnet,**
- daß bei einer Anordnung mehrerer Gruppenschaltungseinheiten der Ordnung m (m≥1) zumindest zwei Gruppenschaltungseinheiten der Ordnung m sowie die von diesen angesteuerten Steuerleitungen der Ordnung m+1 zu einer Gruppenschaltungseinheit der Ordnung m+1 zusammengefaßt werden, wobei bei einer Anordnung mehrerer Gruppenschaltungseinheiten der Ordnung m+1
- jeder Gruppenschaltungseinheit der Ordnung m+1 eine Gruppen-Priorität zugeordnet wird und
in jeder Gruppenschaltungseinheit der Ordnung m+1
- der Steuerausgang (LA) jeder Logikeinheit (LE1...n) mit dem Steuereingang (BE) jeweils eines Busleitungstreibers der Ordnung m+2, dessen Ausgang (BA) an eine für die Gruppenschaltungseinheit der Ordnung m+1 spezifische Steuerleitung der Ordnung m+2 des Gruppensteuerbusses (GB) angeschlossen ist, verbunden ist und
- zusätzliche Steuereingänge (ZST1...s) jeder Logikeinheit (LE1...n) mit denjenigen Steuerleitungen der Ordnung m+2 verbunden sind, die von einer Schaltungseinheit (SE1...n) einer Gruppenschaltungseinheit der Ordnung m+1 mit höherer Gruppen-Priorität gesteuert werden.

4. Anordnung nach einem der Anspruch 1 bis 3,
**dadurch gekennzeichnet,**
- daß in jeder Schaltungseinheit (SE1...3) der Steuerausgang (LA) der Logikeinheit (LE1...3) zusätzlich mit einem Steuereingang (TSE) eines Taktleitungstreibers (TLT1...3) verbunden ist, wobei ein Signalausgang (TA) des Taktleitungstreibers (TLT1...3) mit einer Taktbusleitung (TBL) und ein Signaleingang (TE) des Taktleitungstreibers (TLT1...3) mit einer ein Taktsignal (cl1...3) führenden Taktleitung verbunden ist,
- wobei über die zumindest eine Signalisierungsleitung (ASL) ein die Referenztaktsignal-Qualität des Taktsignals (cl1...3) anzeigendes Gültigkeitssignal übermittelt wird.

5. Anordnung nach Anspruch 4,
**dadurch gekennzeichnet,**
- daß in jede Schaltungseinheit (SE1...3) eine Takteinheit (TI1...3) eingefügt ist, dessen Eingang (PORT) mit einer ein getaktetes, Informationen übermittelndes Signal pcm(1...3) heranführenden Informationsleitung verbunden ist,
- daß ein Ausgang (TA) der Takteinheit (TI1...3) mit der ein Taktsignal (cl1...3) führenden Taktleitung des Taktleitungstreibers (TLT1...3) verbunden ist und
- daß die Takteinheit (TI1...3) Mittel zur Rückgewinnung von Taktsignalen (cl1...3) aus dem am Eingang (PORT) anliegenden Signal (pcm1...3) und zur Weiterleitung der Taktsignale (cl1...3) an den Ausgang (TA) der Takteinheit (TI1...3) aufweist und
- daß die Takteinheit (TI1...3) einen mit der Signalisierungsleitung (ASL) verbundenen Signalisierungsausgang (AL) aufweist und
- daß die Takteinheit (TI1...3) Mittel zur Ermittlung der Referenztaktsignal-Qualität der Taktsignale (cl1...3) und Mittel zur Bildung von Gültigkeitssignalen sowie Mittel zur Weiterleitung der Gültigkeitssignale an den Signalisierungsausgang (AL) aufweist.

6. Anordnung nach einem der Ansprüche 1 bis 5,
**dadurch gekennzeichnet,**
daß in jeder Schaltungseinheit (SE1...3, SE1...z) die Steuereingänge (ST1...3) und/oder die zusätzlichen Steuereingänge (ZST1...s) der Logikeinheit (LE1...3) wahlweise über Schaltmittel (SW1...3) mit den entsprechenden Steuerleitungen (SL1_1...3) erster Ordnung und/oder den Steuerleitungen (SL2_1...m) zweiter Ordnung verbunden sind.

7. Anordnung nach einem der Ansprüche 1 bis 6,
**dadurch gekennzeichnet,**
daß die Mittel zum Steuern des Ausgangs (LA) der Logikeinheit (LE1...3) durch ein NAND-Gatter realisiert werden, wobei der Aktiv-Zustand durch niedriges Potential und der Passiv-Zustand durch hohes Potential repräsentiert ist.

8. Anordnung nach einem der Ansprüche 4 bis 6,
**dadurch gekennzeichnet,**
- daß die Busleitungstreiber (BLT1_1...3, BLT2_1...z) und
- der Taktleitungstreiber (TLT1...3) durch einen integrierten Leitungstreiberbaustein realisiert ist, dessen Ausgang (BA, TA) über einen Steuereingang (BE, TE) hochohmig oder wirksam steuerbar ist.
